# EUROPEAN PATENT APPLICATION

(11) **EP 2 590 463 A1**
(43) Date of publication of application: **08.05.2013**
(21) Application number: 12190930.3
(22) Date of filing: 01.11.2012
(51) Int. Cl.: H04W 72/12, H04W 72/04, H04W 28/22

(54) **Mixed speed scheduling**

(30) Priority: 01.11.2011 WO PCT/CN2011/081630
(71) Applicant: Nokia Siemens Networks Oy, 02610 Espoo (FI)
(72) Inventor: Liu, Jing Xiu, 100016 Chaoyang District (CN); Huang, Xue Gang, 100029 Choayang District (CN)

(57) **Abstract**

The invention relates to an apparatus comprising:
at least one processor and at least one memory including a computer program code, the at least one memory and the computer program code configured to, with the at least one processor, cause the apparatus at least to: monitor user devices in a range area for finding out performance rejections caused by a fairness problem between user devices having different speeds; search for at least one user device experiencing the fairness problem, and adjust resource allocation for balancing the fairness problem.

## Description

### Field

The invention relates to apparatuses, methods, a system, computer programs, computer program products and computer-readable media.

### Background

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

Speed with which user devices move in a network usually have an impact to system performance. Slow-moving user devices typically experience relatively constant channel status and therefore more probably also better performance, whereas fast-moving user devices experience typically changes in channel conditions in both time domain and frequency domain, which may decrease their performance.

### Brief description

According to an aspect of the present invention, there is provided an apparatus comprising: at least one processor and at least one memory including a computer program code, the at least one memory and the computer program code configured to, with the at least one processor, cause the apparatus at least to: monitor user devices in a range area for finding out performance rejections caused by a fairness problem between user devices having different speeds, search for at least one user device experiencing the fairness problem, and adjust resource allocation for balancing the fairness problem.

According to yet another aspect of the present invention, there is provided a method comprising: monitoring user devices in a range area for finding out performance rejections caused by a fairness problem between user devices having different speeds, searching for at least one user device experiencing the fairness problem, and adjusting resource allocation for balancing the fairness problem.

According to yet another aspect of the present invention, there is provided an apparatus comprising: means for monitoring user devices in a range area for finding out performance rejections caused by a fairness problem between user devices having different speeds, means for searching for at least one user device experiencing the fairness problem, and means for adjusting resource allocation for balancing the fairness problem.

According to yet another aspect of the present invention, there is provided a computer program embodied on a computer-readable storage medium, the computer program comprising program code for controlling a process to execute a process, the process comprising: monitoring user devices in a range area for finding out performance rejections caused by a fairness problem between user devices having different speeds, searching for at least one user device experiencing the fairness problem, and adjusting resource allocation for balancing the fairness problem.

### List of drawings

Some embodiments of the present invention are described below, by way of example only, with reference to the accompanying drawings, in which
Figure 1 illustrates an example of a system;
Figure 2 is a flow chart;
Figure 3 illustrates an example of modules or functional operations, and
Figure 4 illustrates examples of apparatuses;

### Description of embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Embodiments are applicable to any user device, such as a user terminal, relay node, server, node, corresponding component, and/or to any communication system or any combination of different communication systems that support required functionalities. The communication system may be a wireless communication system or a communication system utilizing both fixed networks and wireless networks. The protocols used, the specifications of communication systems, apparatuses, such as servers and user terminals, especially in wireless communication, develop rapidly. Such development may require extra changes to an embodiment. Therefore, all words and expressions should be interpreted broadly and they are intended to illustrate, not to restrict, embodiments.

In the following, different exemplifying embodiments will be described using, as an example of an access architecture to which the embodiments may be applied, a radio access architecture based on long term evolution advanced (LTE Advanced, LTE-A), that is based on orthogonal frequency multiplexed access (OFDMA) in a downlink and a single-carrier frequency-division multiple access (SC-FDMA) in an uplink, without restricting the embodiments to such an architecture, however. It is obvious for a person skilled in the art that the embodiments may also be applied to other kinds of communications networks having suitable means by adjusting parameters and procedures appropriately.

In an orthogonal frequency division multiplexing (OFDM) system, the available spectrum is divided into multiple orthogonal sub-carriers. In OFDM systems, the available bandwidth is divided into narrower sub-carriers and data is transmitted in parallel streams. Each OFDM symbol is a linear combination of signals on each of the subcarriers. Further, each OFDM symbol is preceded by a cyclic prefix (CP), which is used to decrease Inter-Symbol Interference. Unlike in OFDM, SC-FDMA subcarriers are not independently modulated.

Typically, a (e)NodeB ("e" stands for evolved) needs to know channel quality of each user device and/or the preferred precoding matrices (and/or other multiple input-multiple output (MIMO) specific feedback information, such as channel quantization) over the allocated sub-bands to schedule transmissions to user devices. Such required information is usually signalled to the (e)NodeB.

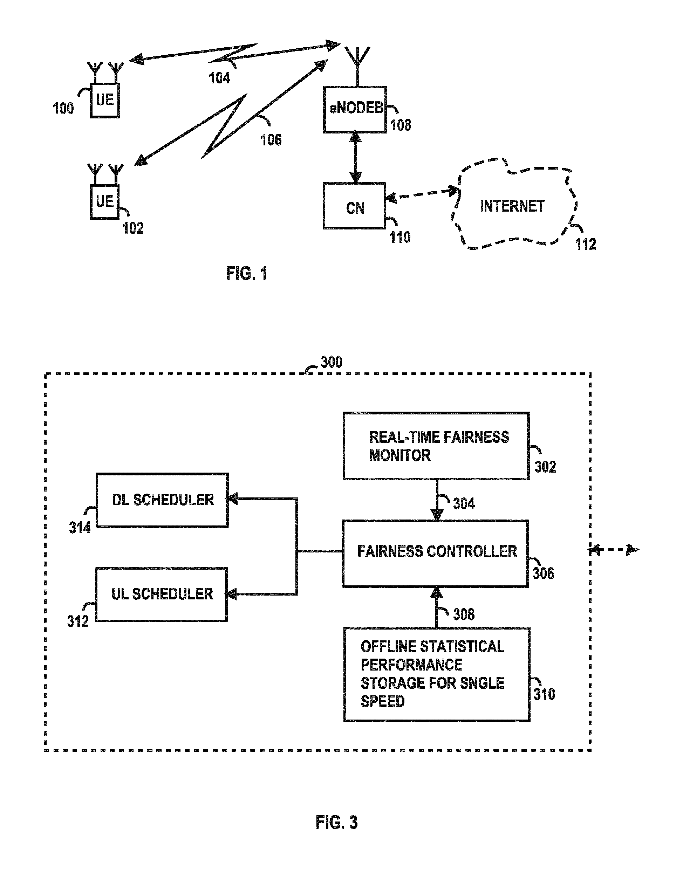

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

Figure 1 shows a part of a radio access network based on E-UTRA, LTE, LTE-Advanced (LTE-A) or LTE/EPC (EPC = evolved packet core, EPC is enhancement of packet switched technology to cope with faster data rates and growth of Internet protocol traffic). E-UTRA is an air interface of Release 8 (UTRA= UMTS terrestrial radio access, UMTS= universal mobile telecommunications system). Some advantages obtainable by LTE (or E-UTRA) are a possibility to use plug and play devices, and Frequency Division Duplex (FDD) and Time Division Duplex (TDD) in the same platform.

Figure 1 shows user devices 100 and 102 configured to be in a wireless connection on one or more communication channels 104, 106 in a cell with a (e)NodeB 108 providing the cell. The physical link from a user device to a (e)NodeB is called uplink or reverse link and the physical link from the (e)NodeB to the user device is called downlink or forward link.

The (e)NodeB, or advanced evolved node B (eNodeB, eNB) in LTE-Advanced, is a computing device configured to control the radio resources of communication system it is coupled to. The (e)NodeB may also be referred to as a base station, an access point or any other type of interfacing device including a relay station capable of operating in a wireless environment.

The (e)NodeB includes transceivers, for example. From the transceivers of the (e)NodeB, a connection is provided to an antenna unit that establishes bidirectional radio links to user devices. The antenna unit may comprise a plurality of antennas or antenna elements. The (e)NodeB is further connected to core network 110 (CN). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

A communications system typically comprises more than one (e)NodeB in which case the (e)NodeBs may also be configured to communicate with one another over links, wired or wireless, designed for the purpose. These links may be used for signalling purposes.

The communication system is also able to communicate with other networks, such as a public switched telephone network or the Internet 112. The communication network may also be able to support the usage of cloud services. It should be appreciated that (e)NodeBs or their functionalities may be implemented by using any node, host, server or access point etc. entity suitable for such a usage.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.
The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device.

The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

It should be understood that, in Figure 1, user devices are depicted to include 2 antennas only for the sake of clarity. The number of reception and/or transmission antennas may naturally vary according to a current implementation.

Further, although the apparatuses have been depicted as single entities, different units, processors and/or memory units (not all shown in Figure 1) may be implemented.

It is obvious for a person skilled in the art that the depicted system is only an example of a part of a radio access system and in practice, the system may comprise a plurality of (e)NodeBs, the user device may have an access to a plurality of radio cells and the system may comprise also other apparatuses, such as physical layer relay nodes or other network elements, etc. At least one of the NodeBs or eNodeBs may be a Home(e)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometres, or smaller cells such as micro-, femto- or picocells. The (e)NodeBs of Figure 1 may provide any kind of these cells. A cellular radio system may be implemented as a multilayer network including several kinds of cells. Typically, in multilayer networks, one (e)node B provides one kind of a cell or cells, and thus a plurality of node Bs are required to provide such a network structure.

In Figure 1, node (e)NodeB 114 may also be a Home(e)Node or pico or femto (e)node. It is operably coupled 120 to the (e)NodeB 108 which may provide a macro cell or a primary communication system cell. User device 116 depicts a user device communicating with the (e)NodeB via a radio link 118. The (e)NodeB may be coupled to the core network 110 directly 122 or indirectly via another network node. The (e)NodeBs may belong to different operators and use different core network as well.

Recently for fulfilling the need for improving the deployment and performance of communication systems, concept of "plug-and-play" node (e)Bs has been introduced. Typically, a network which is able to use "plug-and-play" (e)nodeBs, includes, in addition to Home node (e)Bs (Home(e)nodeBs), a home (e)node B gateway, or HNB-GW (not shown in Figure 1). A HNB Gateway (HNB-GW), which is typically installed within an operator's network aggregates traffic from a large number of HNBs back to a core network through lu-cs and lu-ps interfaces.

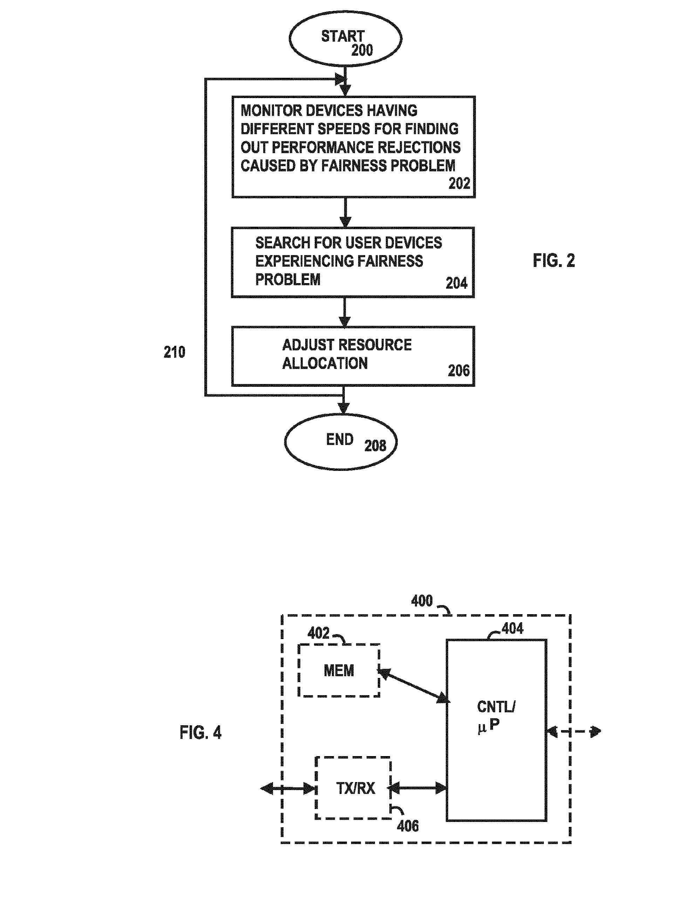

In the following, some embodiments are disclosed in further details in relation to Figure 2.

Proportional fair (PF) scheduling is a widely used scheduling algorithm, since it is simple and channel-aware. Under "normal" conditions, PF can maximize throughputs received by all users. When all users have identical and independent fading characteristics, PF scheduling tends to be fair in the long term. PF scheduling uses as an input current channel conditions reported on a per-slot basis by each user device. User device usually use signal-to-noise ratio (SNR) to determine the required coding rate and modulation type and thus the achievable data rate. The PF scheduling or allocation typically aims to find highest possible rata rates.

Although in theory a proportional fair (PF) scheduler may provide a best trade-off between spectral efficiency and fairness. However, this may be achieved only if window size is large enough to collect the average (experienced) user device throughput used in a PF metric for all user devices in question, typically in the range under consideration. But such an assumption is nearly impossible in practical networks taking limited call duration and different user device arrival times into consideration.

In networks providing mobility, user devices may be in move with different speeds and speed changes in relation to time are common. In the case where both high speed user devices and low speed user devices exist in a same network, some unfairness as to performance level may take place between them when PF scheduling or other scheduling algorithms are used. For example, in such a mixed-speed scenario, a fast-moving user device may experience worse performance as compared to the situation, when all user devices are fast-movers. This is usually caused by a plurality of reasons. One reason is that fast channel variation in the time domain may cause decrease in link quality. Another one is in connection to scheduling: unfairness may be caused by a scheduler, which tends to allocate more resources to user devices having good channel quality. This phenomenon may be emphasized at cell-edges due to deteriorated interference conditions.

It should be appreciated that a proportional fair (PF) scheduler is not the only suitable scheduler, but other options are also provided, such as enhanced-PF and round-robin schedulers.

That is to say, in practice typically, both bad link quality for high speed user devices and scheduler behaviour may cause unfairness between high speed user devices and low speed user devices. Fairness of a scheduling algorithm is thus important for system performance and user experience.

One embodiment may be carried out by a node, server or host. The embodiment starts in block 200.

In block 202, user devices in a range area are monitored for finding out performance rejections caused by a fairness problem between user devices having different speeds.

Performance rejections may be discovered by determining a fairness metric. In an embodiment, for obtaining such a metric, throughput ratios corresponding to different speeds are compared to. An example of such a metric may be:
average user device throughput ratio = high speed average user device throughput ratio / low speed average user device throughput ratio,
   or as adapted to cell-edge area:
   cell edge user device throughput ratio= high speed cell edge user device throughput ratio / low speed cell edge user device throughput ratio.

The parameters used may be obtained from user device performance monitoring, carried out by measurements, for instance.

A value corresponding to user device throughput ratio determined for a single speed scenario (that is all user devices have a same speed) is used as a reference value. The reference value(s) may be determined in advance and stored for later use. The reference value(s) may also be averaged based on statistical analysis. That is to say, statistical information may be used. The reference value(s) may be obtained from user device performance monitoring carried out by measurements, for instance.

Then fairness metric value and the reference value may be compared with each other, and if the fairness metric is higher than the reference value, a fairness problem may exist. A threshold may be determined for being used in evaluating whether the difference is big enough for fairness problem to exist. The threshold may be based on simulations or results obtained from a real network. The threshold may also be adjusted, if needed.

In block 204, at least one user device experiencing the fairness problem are searched for.

If a fairness problem is discovered, user devices experiencing such a phenomenon are searched for. It should be understood that this far the exemplary method has been statistical of the nature.

High-speed user devices may be searched for based on speed estimation which in turn may be based on Doppler shift estimation, for example. Other options used in the search as a separate criterion or in different combinations with themselves and/or with the speed estimation, are reference signal received power (LTE or LTE-Advanced) measurements carried out by a user device, or information on network geometry and/or location of a user device.

In block 206, resource allocation is adjusted for balancing the fairness problem.

A plurality of possibilities for adjusting resource allocation is provided. One option is to allocate more transmission time intervals (TTIs) to be scheduled only for the user devices experiencing a fairness problem. Another option is to allocate more sub-bands to be scheduled only for those user devices.

In the following, an example of radio resource management (RRM) framework 300 with modules or functions involved in fairness-scheduling described above will be explained by means of Figure 3. Figure 3 may also illustrate functionality of a scheduler or scheduling module or unit.

It is emphasized that the example is herein used only for clarification purposes and it should not be taken as limiting embodiments or their practical implementations by any means. It is obvious for a person skilled in the art that the example is simplified for making following and understanding of some aspects of embodiments easier.

Real-time fairness monitor module 302 may monitor performance of user devices having different speeds in a same range in order to determine a fairness metric in a mixed speed scenario (high and low speed user devices existing at a same time in a same area). Signalling 304 conveys the real time fairness metric to fairness controller 306.

Offline statistical performance storage for single speed module 310 may store statistical information on the performance in a single speed scenario (only one-speed user devices present) and determine one or more reference values based on this information. The reference value is conveyed to the fairness optimization controller 306 via signalling 308.

The fairness controller 306 evaluates by comparing the fairness metric with the reference value, whether a severe enough fairness situation exists.

If such a situation does not exist, scheduling is not adjusted otherwise, the following factors may be taken into consideration: which user device should be "re-scheduled" based on speed estimation and/or RSRP/geometry and the amount of needed additional resources (TTIs or sub-bands for example).

The fairness controller 306 conveys the adjustment factors to uplink scheduler 312 and/or downlink scheduler 314 for adjusting scheduling if needed.

The embodiment ends in block 208. The embodiment is repeatable in many ways. One example is shown by arrow 210 in Figure 2.

The steps/points, signaling messages and related functions described above in Figure 2 are in no absolute chronological order, and some of the steps/points may be performed simultaneously or in an order differing from the given one. Other functions may also be executed between the steps/points or within the steps/points and other signaling messages sent between the illustrated messages. Some of the steps/points or part of the steps/points can also be left out or replaced by a corresponding step/point or part of the step/point.

It should be understood that conveying, transmitting and/or receiving may herein mean preparing a data conveyance, transmission and/or reception, preparing a message to be conveyed, transmitted and/or received, or physical transmission and/or reception itself, etc. on a case by case basis.

An embodiment provides an apparatus which may be any remote-site, server, node (home node, relay node, etc.), host or any other suitable apparatus capable to carry out processes described above in relation to Figures 2 and/or 3.

Figure 4 illustrates a simplified block diagram of an apparatus according to an embodiment.

As an example of an apparatus according to an embodiment, it is shown an apparatus 400, such as a node, host, server of web stick, including facilities in a control unit 404 (including one or more processors, for example) to carry out functions of embodiments according to Figures 2 and/or 3.

In Figure 4, block 406 includes parts/units/modules needed for reception and transmission, usually called a radio front end, RF-parts, radio parts, etc.

Another example of an apparatus 400 may include at least one processor 404 and at least one memory 402 including a computer program code, the at least one memory and the computer program code configured to, with the at least one processor, cause the apparatus at least to: monitor user devices in a range area for finding out performance rejections caused by a fairness problem between user devices having different speeds, search for at least one user device experiencing the fairness problem, and adjust resource allocation for balancing the fairness problem.

Yet another example of an apparatus comprises means 404 for monitoring user devices in a range area for finding out performance rejections caused by a fairness problem between user devices having different speeds, means 404 for searching for at least one user device experiencing the fairness problem, and means 404 for adjusting resource allocation for balancing the fairness problem.

Yet another example of an apparatus comprises a monitoring unit configured to monitor user devices in a range area for finding out performance rejections caused by a fairness problem between user devices having different speeds, a searcher configured to search for at least one user device experiencing the fairness problem, and an adjuster configured to adjust resource allocation for balancing the fairness problem.

It should be understood that the apparatuses may include or be coupled to other units or modules etc, such as radio parts or radio heads, used in or for transmission and/or reception. This is depicted in Figure 4 as an optional block 406.

Although the apparatuses have been depicted as one entity in Figure 4, different modules and memory may be implemented in one or more physical or logical entities.

An apparatus may in general include at least one processor, controller or a unit designed for carrying out control functions operably coupled to at least one memory unit and to various interfaces. Further, the memory units may include volatile and/or non-volatile memory. The memory unit may store computer program code and/or operating systems, information, data, content or the like for the processor to perform operations according to embodiments. Each of the memory units may be a random access memory, hard drive, etc. The memory units may be at least partly removable and/or detachably operationally coupled to the apparatus. The memory may be of any type suitable for the current technical environment and it may be implemented using any suitable data storage technology, such as semiconductor-based technology, flash memory, magnetic and/or optical memory devices. The memory may be fixed or removable.

The apparatus may be a software application, or a module, or a unit configured as arithmetic operation, or as a program (including an added or updated software routine), executed by an operation processor. Programs, also called program products or computer programs, including software routines, applets and macros, may be stored in any apparatus-readable data storage medium and they include program instructions to perform particular tasks. Computer programs may be coded by a programming language, which may be a high-level programming language, such as objective-C, C, C++, C#, Java, etc., or a low-level programming language, such as a machine language, or an assembler.

Modifications and configurations required for implementing functionality of an embodiment may be performed as routines, which may be implemented as added or updated software routines, application circuits (ASIC) and/or programmable circuits. Further, software routines may be downloaded into an apparatus. The apparatus, such as a node device, or a corresponding component, may be configured as a computer or a microprocessor, such as single-chip computer element, or as a chipset, including at least a memory for providing storage capacity used for arithmetic operation and an operation processor for executing the arithmetic operation. Embodiments provide computer programs embodied on a distribution medium, comprising program instructions which, when loaded into electronic apparatuses, constitute the apparatuses as explained above. The distribution medium may be a non-transitory medium.

Other embodiments provide computer programs embodied on a computer readable storage medium, configured to control a processor to perform embodiments of the methods described above. The computer readable storage medium may be a non-transitory medium.

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

The techniques described herein may be implemented by various means. For example, these techniques may be implemented in hardware (one or more devices), firmware (one or more devices), software (one or more modules), or combinations thereof. For a hardware implementation, the apparatus may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, digitally enhanced circuits, other electronic units designed to perform the functions described herein, or a combination thereof. For firmware or software, the implementation may be carried out through modules of at least one chip set (e.g., procedures, functions, and so on) that perform the functions described herein. The software codes may be stored in a memory unit and executed by processors. The memory unit may be implemented within the processor or externally to the processor. In the latter case it may be communicatively coupled to the processor via various means, as is known in the art. Additionally, the components of systems described herein may be rearranged and/or complimented by additional components in order to facilitate achieving the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The invention and its embodiments are not limited to the examples described above but may vary within the scope of the claims.

## Claims

1. An apparatus comprising:
at least one processor and at least one memory including a computer program code, the at least one memory and the computer program code configured to, with the at least one processor, cause the apparatus at least to:
monitor user devices in a range area for finding out performance rejections caused by a fairness problem between user devices having different speeds;
search for at least one user device experiencing the fairness problem, and
adjust resource allocation for balancing the fairness problem.

2. The apparatus of claim 1, wherein the monitoring is carried out based on fairness metric, wherein throughput ratios corresponding to different speeds are compared to.

3. The apparatus of claim 2, wherein the monitoring further comprises using a reference value corresponding to user device throughput ratio determined for a single speed scenario.

4. The apparatus of any preceding claim, wherein the search is based on at least one of the following: reference signal received power measurements carried out by at least one user device, information on network geometry, speed estimation of the at least one user device and location of the at least one user device.

5. The apparatus of any preceding claim, wherein the adjustment of the resource allocation is carried out by using at least one of the following: allocating more transmission time intervals (TTIs) to be scheduled only for user devices experiencing the fairness problem and allocating more sub-bands to be scheduled only for user devices experiencing the fairness problem.

6. The apparatus of any preceding claim, the apparatus comprising a host, node or server.

7. A computer program comprising program instructions which, when loaded into the apparatus, constitute the modules of any preceding claim 1 to 5.

8. A method comprising:
monitoring user devices in a range area for finding out performance rejections caused by a fairness problem between user devices having different speeds;
searching for at least one user device experiencing the fairness problem, and
adjusting resource allocation for balancing the fairness problem.

9. The method of claim 8, wherein the monitoring is carried out based on fairness metric, wherein throughput ratios corresponding to different speeds are compared to.

10. The method of claim 9, wherein the monitoring further comprises using a reference value corresponding to user device throughput ratio determined for a single speed scenario.

11. The method of any preceding claim 8 to 10, wherein the searching is based on at least one of the following: reference signal received power measurements carried out by at least one user device, information on network geometry, speed estimation of the at least one user device and location of the at least one user device.

12. The method of any preceding claim 8 to 11, wherein the adjusting of the resource allocation is carried out by using at least one of the following: allocating more transmission time intervals (TTIs) to be scheduled only for user devices experiencing the fairness problem and allocating more sub-bands to be scheduled only for user devices experiencing the fairness problem.

13. An apparatus comprising means for carrying out the method according to any one of claims 8 to 12.

14. A computer program embodied on a computer-readable storage medium, the computer program comprising program code for controlling a process to execute a process, the process comprising:
monitoring user devices in a range area for finding out performance rejections caused by a fairness problem between user devices having different speeds;
searching for at least one user device experiencing the fairness problem, and
adjusting resource allocation for balancing the fairness problem.

15. The computer program of claim 14, wherein the monitoring is carried out based on fairness metric, wherein throughput ratios corresponding to different speeds are compared to.

16. The computer program of claim 15, wherein the monitoring further comprises using a reference value corresponding to user device throughput ratio determined for a single speed scenario.

17. The computer program of any preceding claim 14 to 16, wherein the searching is based at least one of the following: on reference signal received power measurements carried out by at least one user device, information on network geometry, speed estimation of the at least one user device and location of the at least one user device.

18. The computer program of any preceding claim 14 to 17, wherein the adjustment of the resource allocation is carried out by using at least one of the following: allocating more transmission time intervals (TTIs) to be scheduled only for user devices experiencing the fairness problem and allocating more sub-bands to be scheduled only for user devices experiencing the fairness problem.
